(19) Europäisches Patentamt
European Patent Office
Office européen des brevets

(11) **EP 3 631 354 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **18732255.7**

(22) Anmeldetag: **29.05.2018**

(51) Internationale Patentklassifikation (IPC):
**G01B 7/16** (2006.01)   **G01L 1/18** (2006.01)

(52) Gemeinsame Patentklassifikation (CPC):
**G01B 7/16**

(86) Internationale Anmeldenummer:
**PCT/EP2018/064120**

(87) Internationale Veröffentlichungsnummer:
**WO 2018/219976 (06.12.2018 Gazette 2018/49)**

(54) **MEHRGITTER-DEHNUNGSMESSSTREIFEN UND METALLBAND MIT SOLCH EINEM DEHNUNGSMESSSTREIFEN**

MULTI-GRID STRAIN GAUGE AND METAL STRIP HAVING SUCH A STRAIN GAUGE

JAUGE DE DÉFORMATION À RÉSEAUX MULTIPLES ET BANDE MÉTALLIQUE AVEC UNE TELLE JAUGE DE DÉFORMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2017 EP 17173327**

(43) Veröffentlichungstag der Anmeldung:
**08.04.2020 Patentblatt 2020/15**

(73) Patentinhaber: **voestalpine Stahl GmbH**
**4020 Linz (AT)**

(72) Erfinder:
• **OSSBERGER, Gerald**
**4060 Leonding (AT)**
• **GSTÖTTENBAUER, Norbert**
**4209 Engerwitzdorf (AT)**
• **JAKOBY, Bernhard**
**4040 Linz (AT)**
• **HILBER, Wolfgang**
**4262 Leopoldschlag (AT)**
• **SELL, Johannes**
**4030 Linz (AT)**
• **ENSER, Herbert**
**4020 Linz (AT)**

(74) Vertreter: **Jell, Friedrich**
**Bismarckstrasse 9**
**4020 Linz (AT)**

(56) Entgegenhaltungen:
WO-A1-2007/062813   WO-A1-2017/028466
WO-A1-2018/117655   CN-A- 105 352 431
FR-A1- 3 037 138   US-A- 4 430 895

**Beschreibung**

Technisches Gebiet

Die Erfindung betrifft einen Dehnungsmessstreifen mit einem ersten Messgitter, mit einem zweiten Messgitter und mit einem Substrat, auf dem diese beiden Messgitter in einer gemeinsamen Ebene angeordnet sind, und ein Metallband mit solch einem Dehnungsmessstreifen.

Stand der Technik

Folien-Dehnungsmessstreifen mit mehreren Messgittern auf einem gemeinsamen Substrat lateral nebeneinander vorzusehen, ist aus dem Stand der Technik bekannt. Deren Messgitter können gleiche oder verschiedene Orientierungsrichtungen aufweisen, wobei Letzteres auch unter DMS-Rosetten bekannt ist. Allen Folien-Dehnungsmessstreifen ist ein Messgitter aus einem Widerstandselement gemeinsamen, das beispielsweise aus einer Konstantan-Folie mittels eines Ätzverfahrens erzeugt wird, welche Konstantan-Folie vorher auf ein Kunststoff-Substrat auflaminiert worden ist. Derartige Folien-Dehnungsmessstreifen sind in der Herstellung vergleichsweise aufwendig und fordern zudem - aufgrund des Ätzverfahrens - relativ weit voneinander beabstandete Messgitter, um Kurzschlüsse zwischen den Widerstandselementen zu vermeiden.

Des Weiteren müssen derart hergestellte Folien-Dehnungsmessstreifen mit dem Prüfobjekt, dessen Dehnungszustand gemessen werden soll, mechanisch verbunden, nämlich aufgeklebt, werden. Nachteilig kann die Kleberschicht dazu führen, dass die tatsächliche Dehnung des Prüfobjekts nicht hinreichend an den Dehnungsmessstreifen übertragen wird.

Aus dem Stand der Technik sind folgende Dokumente bekannt:
WO 2017/028466 A1, US 4 430 895 A, CN 105 352 431 A. Alle diese Dokumente befassen sich mit Mehrgitter-Dehnungsmessstreifen.

Darstellung der Erfindung

Die Erfindung hat sich daher die Aufgabe gestellt, einen Dehnungsmessstreifen mit mehreren Messgittern der eingangs geschilderten Art derart konstruktiv zu verändern, dass dieser kostengünstig hergestellt werden kann und dessen Messdaten zudem robust gegenüber einer Temperaturstörgröße ausgewertet werden können.

Die Erfindung löst die gestellte Aufgabe durch die Merkmale der Ansprüche 1 oder 7. Weist das mehrschichtige Substrat eine metallische Schicht und eine elektrisch isolierende Schicht auf, auf welche elektrisch isolierende Schicht beide aus einem piezoresistiven Material bestehenden Messgitter aufgedruckt sind, kann ein vergleichsweise einfach und reproduzierbar handzuhabendes Herstellungsverfahren ermöglicht werden, durch welches die Messgitter vergleichsweise nahe lateral nebeneinander vorsehbar sind. Durch diese sich ergebende räumliche Nähe der beiden Messgitter und insbesondere auch durch deren vergleichsweise gute thermische Kopplung über die metallische Schicht des Substrats kann in weiterer Folge von einer gleichen Temperaturstörgröße auf beide Messgitter ausgegangen werden - die elektrisch isolierende Schicht mit den auf diese aufgedruckten Messgittern ist nämlich auf der metallischen Schicht. Dies eröffnet die Möglichkeit, über geeignete Verfahren, beispielsweise Messbrücken oder numerische Methoden, eine exakte Temperaturkompensation am Messergebnis des Dehnungsmessstreifens vorzunehmen.

Der erfindungsgemäße Dehnungsmessstreifen kann daher Temperaturstörgrößen robust gegenüberstehen, wodurch hohe Messgenauigkeit am Dehnungsmessstreifen sichergestellt werden kann.

Insbesondere wird für das Drucken der Messgitter ein piezoresistives Material verwendet, beispielsweise eine silberbasierte, graphitbasierte etc. Paste. Für dieses Drucken sind verschiedenste Verfahren, etwa Siebdruck, Tiefdruck, elektronische Druckverfahren etc., vorstellbar.

Die Empfindlichkeit gegenüber einer Temperaturstörgröße wird erfindungsgemäß, nach Anspruch 1, weiter vermindert, wenn das zweite Messgitter zum ersten Messgitter rechtwinkelig orientiert als passives Messgitter zur Temperaturkompensation der Dehnungsmesswerte des ersten Messgitters ausgebildet ist, wofür beide Messgitter aus demselben piezoresistiven Material bestehen. Durch die rechtwinklige Orientierung kann nämlich jenes Messgitter normal zur Orientierungsrichtung des Dehnungsmessstreifens frei von mechanischen Kräften gehalten werden und damit einzig der Aufnahme der Temperaturstörgröße dienen - wodurch beispielsweise mit einer Halb- oder Vollbrückenschaltung aus dem Messergebnis des ersten Messgitters der Temperatureinfluss verringert bzw. eliminiert werden kann. Dies wird erfindungsgemäß, nach Anspruch 1, verbessert, wenn beide Messgitter aus demselben piezoresistiven Material bestehen.

Die Sensitivität des Dehnungsmessstreifens kann weiter erhöht werden, wenn das erste und zweite Messgitter den gleichen Nennwiderstand aufweisen.

Die Temperaturbelastung auf beide Messgitter wird erfindungsgemäß, nach Anspruch 1, aneinander angeglichen, wenn das erste und zweite Messgitter je zumindest einen mäanderförmig verlaufenden Gitterabschnitt aufweisen, wobei ein Gitterabschnitt des ersten Messgitters zwischen zwei Gitterabschnitten des zweiten Messgitters angeordnet ist. Erfindungsgemäß kann damit die Empfindlichkeit der Messergebnisse, z.B. erfasst über eine Messbrücke, gegenüber einer Temperaturstörgröße weiter reduziert werden, was zur Messgenauigkeit am Dehnungsmessstreifen beiträgt.

Die Konstruktion des Dehnungsmessstreifens kann vereinfacht werden, wenn jedes Messgitter mehrere mäanderförmig verlaufende Gitterabschnitte aufweist, welche Gitterabschnitte abwechselnd nacheinander angeordnet sind. Des Weiteren kann diese gleichmäßigere Verteilung der Gitterabschnitte dazu beitragen, dass beide Messgitter ähnlicherer Temperaturbeaufschlagung unterliegen - womit eine genauere Kompensation in den Messdaten möglich werden kann.

Der genannte Vorteil kann besonders ausgeprägt sein, wenn ein Gitterabschnitt des ersten Messgitters mehrere, insbesondere zwei, nebeneinander verlaufende Mäanderreihen aufweist.

Beträgt das Verhältnis von mindestens einer Gitterlänge eines ersten Gitterabschnittes zu mindestens einer Gitterbreite eines zweiten Gitterabschnittes 1:0,75 bis 1:1,25, kann der Dehnmessstreifen robust gegenüber einer Temperaturstörgröße ausgewertet werden. Insbesondere ist dies erreichbar, wenn dieses Verhältnis 1:0,9 bis 1:1,1 beträgt, wovon sich als bevorzugt 1:1 herausstellen kann.

Sind die Gitterabschnitte der jeweiligen Messgitter gleich verlaufend ausgebildet, ist die Konstruktion des Dehnungsmessstreifens weiter vereinfachbar. Dies umso mehr, wenn die Gitterabschnitte der jeweiligen Messgitter gleich sind.

Die Empfindlichkeit gegenüber einer Temperaturstörgröße wird auch erfindungsgemäß, nach Anspruch 7, mit zwei aktiven Messgittern auf einem gemeinsamen Substrat verringert, wenn das erste und zweite Messgitter gleichorientiert sind und als aktive Messgitter je ein piezoresistives Material mit zueinander unterschiedlichen Temperaturkoeffizienten und zueinander unterschiedlichen Dehnungsfaktoren aufweisen.

Weisen das erste und zweite Messgitter je einen mäanderförmig verlaufenden Gitterabschnitt auf, ist die Konstruktion des Dehnungsmessstreifens weiter vereinfachbar - bzw. kann damit ein besonders kostengünstiger Mehrgitter-Dehnungsmessstreifen ermöglicht werden.

Ein kompakter und robuster Dehnungsmessstreifen kann erreicht werden, wenn die Gitterabschnitte ineinander angeordnet gleichverlaufend sind. Zudem ist es damit möglich, das Temperaturniveau der beiden Dehnungsmessstreifen aneinander anzupassen und damit eine Temperaturkompensation zu verbessern.

Vorstehend genannter Vorteil ergibt sich insbesondere dann, wenn die beiden Messgitter doppelmäanderförmig verlaufen - und somit eine gleiche Temperaturbelastung beider Messgitter sichergestellt werden kann. Der erfindungsgemäße Mehrgitter-Dehnungsmessstreifen kann in der Messdatenerfassung daher eine besonders hohe Genauigkeit gewährleisten.

Vorzugsweise können die Dehnungsmessstreifen bei einer Brückenschaltung verwendet werden. Hierbei ist eine Verschaltung der Dehnungsmessstreifen zu Halb- oder Vollbrücken denkbar.

Vorzugsweise ist die metallische Schicht des Substrats ein Aluminiumband oder Stahlband oder eine Platine aus Aluminium oder Stahl. Eine metallische Schicht besteht demnach aus Metall oder Legierungen. Dies kann eine besonders gute thermische Kopplung zwischen den beiden Messgittern schaffen.

Vorzugsweise ist die elektrisch isolierende Schicht des Substrats ein Primer oder eine Isolierlackschicht oder eine organische oder anorganische Vorbeschichtung.

Die Konstruktionsverhältnisse für einen Dehnungsmessstreifen können durch ein Metallband mit einer Beschichtung vereinfacht werden, wenn dieses Metallband die metallische Schicht und dessen Beschichtung die elektrisch isolierende Schicht des Substrats ausbildet. Dadurch kann nicht nur die thermische Kopplung zwischen den Messgittern verbessert werden, sondern auch hinfällig werden, eine gesonderte Klebeschicht zwischen Prüfkörper und Messgitter vorsehen zu müssen. Erfindungsgemäß kann so die Dehnung unvollständig vom Prüfobjekt auf den Dehnungsmessstreifen übertragen werden, was die Messgenauigkeit erhöhen kann.

Kurze Beschreibung der Zeichnungen

In den Figuren ist beispielsweise der Erfindungsgegenstand anhand mehrerer Ausführungsvarianten näher dargestellt. Es zeigen

Fig. 1     eine Draufsicht auf einen Dehnungsmessstreifen mit mehreren Messgittern nach einem ersten Ausführungsbeispiel,

Fig. 1a    eine teilweise aufgerissene Schnittansicht nach I-I der Fig. 1 und

Fig. 2     eine Draufsicht auf einen Dehnungsmessstreifen mit mehreren Messgittern nach einem zweiten Ausführungsbeispiel.

Wege zur Ausführung der Erfindung

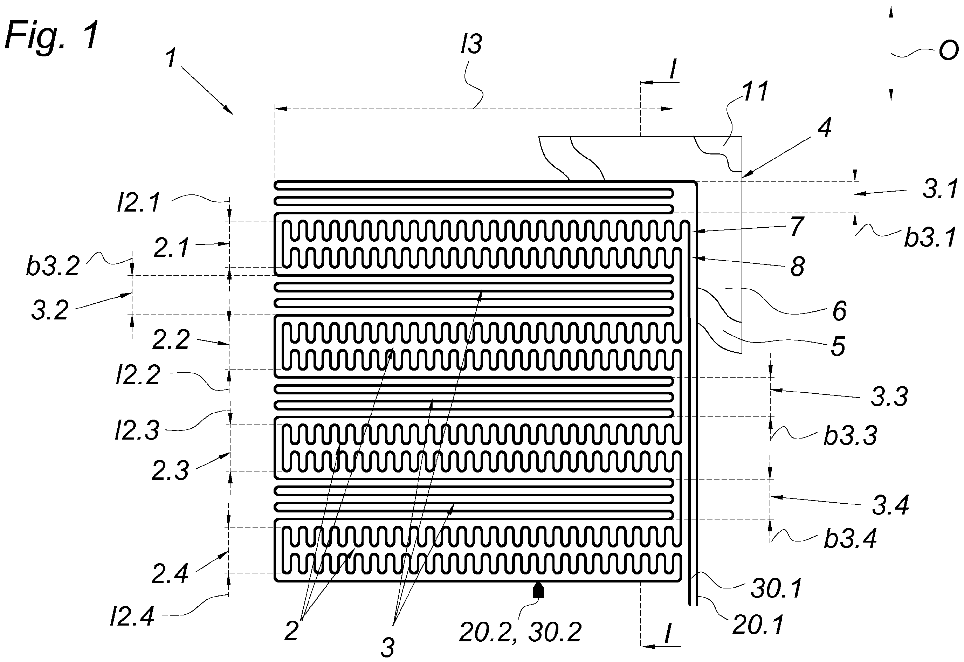

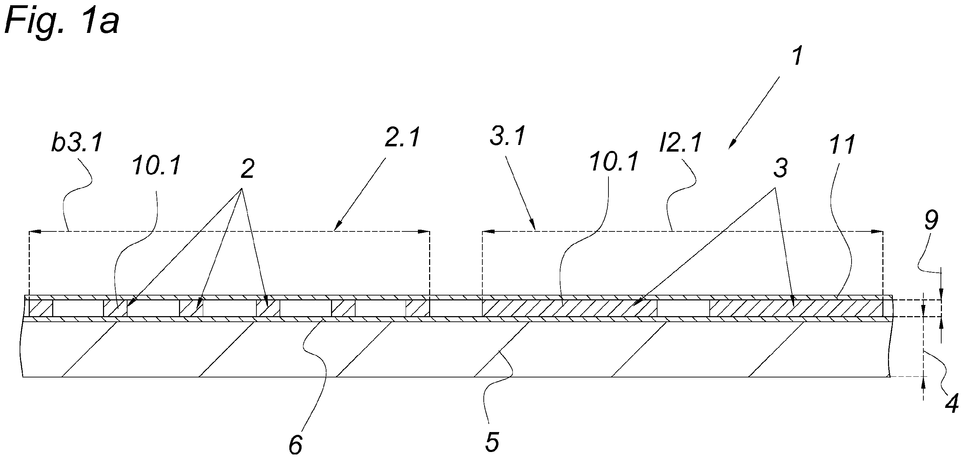

Der nach den Figuren 1 und 1a beispielsweise dargestellte Dehnungsmessstreifen 1 nach einem ersten Ausführungsbeispiel weist ein erstes Messgitter 2 sowie ein zweites Messgitter 3 auf. Das erste Messgitter 2 entwickelt sich zwischen den beiden Anschlüssen 20.1 und 20.2 - das zweite Messgitter 3 zwischen den beiden elektrischen Anschlüssen 30.1 und 30.2, wobei beide Messgitter 2, 3 endseitig an den Anschlüssen 20.2 und 30.2 kurzgeschlossen sind. Die beiden Messgitter 2, 3 sind auf einem Substrat 4 vorgesehen und in einer gemeinsamen Ebene 9 angeordnet. Wie in Fig. 1 und 1a zu erkennen, sind diese Messgitter 2, 3 lateral nebeneinander auf dem Substrat 4 vorgesehen.

Erfindungsgemäß weist das mehrschichtige Substrat 4 eine metallische Schicht 5 und eine elektrisch isolierende Schicht 6 auf, was in Fig. 1a dargestellt ist. Die elektrisch isolierende Schicht 6 ist hierzu auf der metallischen Schicht 5.

Die elektrisch isolierende Schicht 6 kann beispielsweise ein Primer oder eine Grundierung, Beschichtung etc. eines Blechs, Bands, einer Platine, eines Spaltbands, Trägers etc. auf der metallischen Schicht 5 sein, welches Blech, Band, Spaltband, Platine, Träger etc. die metallische Schicht 5 beispielsweise ausbildet. Die metallische Schicht 5, die elektrisch isolierende Schicht 6 und die beiden Messgitter 2, 3 bzw. 102, 103 sind schichtweise übereinander angeordnet. Vorzugsweise deckt die elektrisch isolierende Schicht 6 die metallische Schicht 5 vollflächig ab.

Eine vergleichsweise gute thermische Kopplung der beiden Messgitter 2, 3 bzw. 102, 103 über die metallische Schicht 5 des Substrats 4 ist durch dieses mehrschichtige Substrat 4 erreichbar, wodurch in weiterer Folge von einer gleichen Temperaturstörgröße auf beide Messgitter 2, 3 bzw. 102, 103 ausgegangen werden kann. Auch sind damit die Messgitter 2, 3 bzw. 102, 103 durch die elektrische isolierende Schicht 6 kurzschlusssicher gegenüber der metallischen Schicht 5. Das Substrat 4 kann weitere Schichten aufweisen, was nicht dargestellt ist.

Zudem werden die beiden Messgitter 2, 3 auf das Substrat 4, und zwar auf die elektrisch isolierende Schicht 6, aufgedruckt, wodurch diese kurzschlussfrei nahe nebeneinander vorgesehen werden können. Hierfür isoliert die elektrisch isolierende Schicht 6 die beiden Messgitter 2, 3 gegenüber der metallischen Schicht 5 des Substrats 4 elektrisch ab. Für das Ducken wird ein piezoresistives Material verwendet, beispielsweise silberbasierte oder graphitbasierte Pasten. Die Messgitter 2, 3 werden daher durch Drucken des piezoresistiven Materials auf die elektrisch isolierende Schicht 6 aufgedruckt.

Auf diesen beiden Messgittern 2, 3 bzw. 102, 103 ist beispielweise ein Decklack 11 vorgesehen.

Der damit hergestellte Dehnungsmessstreifen 1 ist vergleichsweise kostengünstig und kann durch seine kompakte Ausführung auch Messdaten liefern, mit denen robust eine Temperaturstörgröße kompensierbar ist, beispielsweise über eine Brückenschaltung.

Wie nach Fig. 1 weiter zu erkennen, weisen die beiden Messgitter 2, 3 eine zueinander unterschiedliche Orientierung auf - im gegebenen Fall sind diese Messgitter 2, 3 rechtwinkelig orientiert. Damit wirkt das zweite Messgitter 3 bei mechanischer Belastung in Orientierungsrichtung O des ersten Messgitters 2 als passives Messgitter. Beide Messgitter 2, 3 bestehen aus demselben piezoresistiven Material und weisen vorzugsweise den gleichen Nennwiderstand R0 [$\Omega$] auf. Damit kann das zweite, mechanisch unbelastete Messgitter 3 zur Temperaturkompensation der Dehnungsmesswerte des ersten Messgitters 2 herangezogen werden - beispielsweise, indem beide Messgitter 2, 3 im selben Halbbrückenzweig einer Halbbrücke vorgesehen werden.

Das Messgitter 2 bildet sich aus vier, elektrisch in Serie geschaltete und mäanderförmig verlaufende Gitterabschnitte 2.1, 2.2, 2.3 und 2.4. Derart kann eine besonders hohe Empfindlichkeit des ersten Messgitters 2 auf mechanische Belastungen in Orientierungsrichtung O erreicht werden.

Das Messgitter 3 bildet sich aus vier, elektrisch in Serie geschalteten und mäanderförmig verlaufenden Gitterabschnitten 3.1, 3.2, 3.3 und 3.4. Indem ein Gitterabschnitt 2.2 des ersten Messgitters 2 zwischen zwei Gitterabschnitten 3.1 und 3.2 des zweiten Messgitters 3 angeordnet ist, stellt sich ein nahezu gleicher Temperatureinfluss auf beide Messgitter 2 und 3 ein - womit sich unter Verwendung von Messgittern 2 und 3 in einer gemeinsamen nicht näher dargestellten Halbbrücke die Temperaturstörgröße auf das Messergebnis weitgehend minimieren lässt. Letztgenanntes ist besonders vorteilhaft erreicht, da die Gitterabschnitte 2.1, 2.2, 2.3, 2.4 und 3.1, 3.2, 3.3, 3.4 abwechselnd nebeneinander und aneinander anschließend angeordnet sind, wie dies in Fig. 1 erkannt werden kann.

Zudem zeigt sich nach Fig. 1, dass die Gitterabschnitte 2.1, 2.2, 2.3 und 2.4 des ersten Messgitters 2, je zwei, nebeneinander verlaufende Mäanderreihen 7, 8 aufweisen. Des Weiteren sind alle Gitterlängen l2.1, l2.2, l2.3, l2.4 der ersten Gitterabschnitte 2.1, 2.2, 2.3, 2.4 im Wesentlichen gleich lang wie alle Gitterbreiten b3.1, b3.2, b3.3, b3.4 der zweiten Gitterabschnitte 3.1, 3.2, 3.3, 3.4 - wodurch bevorzugte Voraussetzungen geschaffen werden, beide Messgitter 2, 3 auf einem gleichen Temperaturniveau zu halten.

Zudem sind die Gitterabschnitte 2.1, 2.2, 2.3, 2.4 bzw. 3.1, 3.2, 3.3, 3.4 der jeweiligen Messgitter 2, 3 gleich ausgebildet und weisen damit einen gleichen Verlauf auf, was die Konstruktion des Dehnungsmessstreifen 1 vereinfacht.

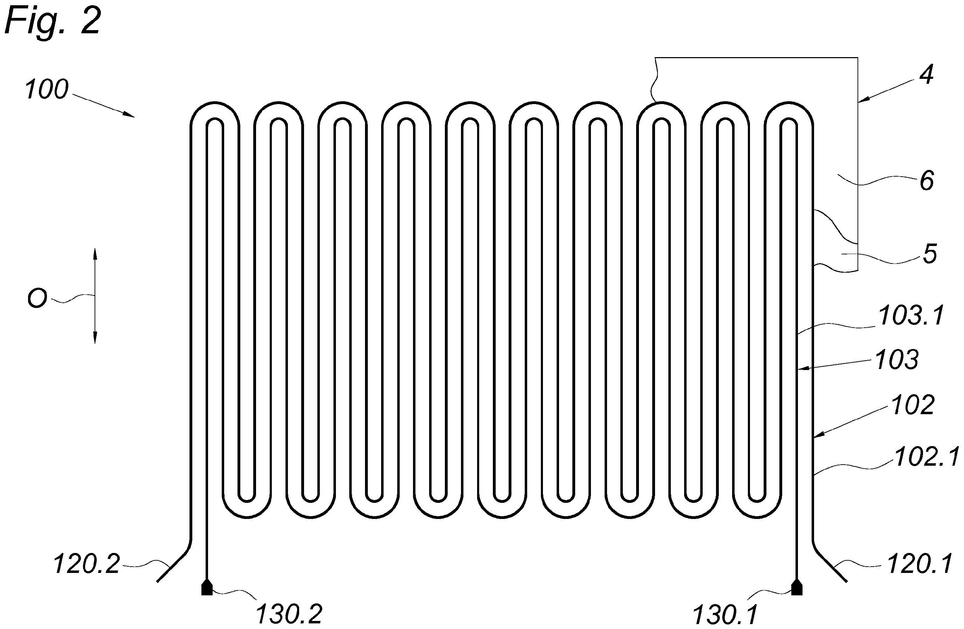

Gemäß Fig. 2 ist ein Dehnungsmessstreifen 100 nach einem zweiten Ausführungsbeispiel dargestellt. Dieser Dehnungsmessstreifen 100 weist ein erstes Messgitter 102 und ein zweites Messgitter 103 auf, die ineinander angeordnet sind bzw. die in ihren Verläufen ineinander greifen.

Das erste Messgitter 102 entwickelt sich zwischen den beiden Anschlüssen 120.1 und 120.2 und das zweite Messgitter 103 zwischen den beiden elektrischen Anschlüssen 130.1 und 130.2. Die beiden Messgitter 102, 103 sind in einer gemeinsamen Ebene 9 angeordnet - was beispielsweise ein mit einem Primer bzw. einer Grundierung als elektrische Isolierung 5 beschichtetes Blech 6 oder dgl. sein kann, wie dies bereits zum ersten Ausführungsbeispiel beschrieben ist.

Erfindungsgemäß werden die beiden Messgitter 102, 103 auf das Substrat 4 aufgedruckt, und zwar auf die elektrisch isolierende Schicht 6 des Substrats 4, welches Substrats 4 zudem noch eine metallische Schicht 5 aufweist. Der Aufbau dieses mehrschichtigen Substrats 4 ist gleich zum ersten Ausführungsbeispiel und der Fig. 1a zu entnehmen.

Dadurch können die beiden Messgitter 102, 103 kurzschlussfrei nahe aneinander vorgesehen werden können. Für das Drucken werden piezoresistive Materialien verwendet, beispielsweise eine silberbasierte Paste für das erste Messgitter 102 und eine graphitbasierte Paste für das zweite Messgitter 103. Die Messgitter 102, 103 werden daher durch Drucken des piezoresistiven Materials auf die elektrisch isolierende Schicht 6 aufgedruckt.

Der damit hergestellte Dehnungsmessstreifen 100 ist vergleichsweise kostengünstig herstellbar und weist durch seine kompakte Ausführung auch eine besonders gleichmäßige Temperaturbelastung beider Messgitter auf. Numerische Kompensationsverfahren können damit die Temperaturstörgröße aus den Messergebnissen des Dehnungsmessstreifens 100 robust entfernen.

Entsprechend Fig. 2 sind das erste und zweite Messgitter 102, 103 gleichorientiert, sodass diese beiden Messgitter 102, 103 als aktive Messgitter bei mechanischer Belastung in dieselbe Orientierungsrichtung O Messdaten aufnehmen. Beide Messgitter unterliegen daher derselben Temperaturstörgröße und der gleichen Dehnung. Zu der Kompensation der Temperaturstörgröße weisen die piezoresistiven Materialien der Messgitter 102, 103 zueinander unterschiedlichen Temperaturkoeffizienten ($\alpha2$, $\alpha3$) und zueinander unterschiedliche Dehnungsfaktoren (k-Faktoren: k1, k2) auf. Durch diese Unterschiede ist der Temperatureinfluss im Messergebnis kompensierbar.

Für eine numerische Kompensation der Temperaturstörgröße werden die Widerstände $R_{102}$ und $R_{103}$ der Messgitter 102 und 103 mit einem geeigneten Verfahren, im einfachsten Fall mit einem Widerstandsmessgerät, gemessen.

Für jedes der Messgitter lässt sich sein Widerstand, unter Vernachlässigung von Temperatur- und Dehnungsabhängigkeiten höherer Ordnung, formal beschreiben durch

$$R(\varepsilon, T) = R_{T_0}\big(1 + k\,\varepsilon + \alpha_1(T - T_0)\big).$$

Hierbei ist $R_{T_0}$ der Nennwiderstand des jeweiligen Messgitters ohne Dehnung bei einer Referenztemperatur $T_0$, $k$ der $k$-Faktor, $\alpha$ der Temperaturkoeffizient, $\varepsilon$ die Dehnung und $T$ die Temperatur des Messgitters. Angewandt auf die Messgitter 102 und 103 ergibt sich damit ein Gleichungssystem, bestehend aus zwei Gleichungen und den zwei unbekannten Größen Temperatur und Dehnung:

$$R_{102}(\varepsilon, T) = R_{102,T_0}(1 + k_1\varepsilon + \alpha_1(\mathrm{T} - \mathrm{T}_0))$$

$$R_{103}(\varepsilon, T) = R_{103,T_0}(1 + k_2\varepsilon + \alpha_2(\mathrm{T} - \mathrm{T}_0))$$

Durch Lösung dieses Gleichungssystems lassen sich die gemeinsame Temperatur und Dehnung der Messgitter 102 und 103 berechnen.

Ein in den Messdaten exakter Dehnungsmessstreifen 100 ist damit geschaffen.

Wie zudem der Fig. 2 zu entnehmen ist, weisen das erste und zweite Messgitter 102, 103 je einen einzigen mäanderförmig verlaufenden Gitterabschnitt 102.1, 103.1 auf. Diese Gitterabschnitt 102.1, 103.1 sind ineinander angeordnet gleichverlaufend, wodurch die beiden Messgitter 102, 103 doppelmäanderförmig verlaufen.

## Patentansprüche

1. Dehnungsmessstreifen mit einem ersten Messgitter (2, 102), mit einem zweiten Messgitter (3, 103) und mit einem Substrat (4), auf dem diese beiden Messgitter (2, 3 bzw. 102, 103) in einer gemeinsamen Ebene (9) angeordnet sind, wobei das mehrschichtige Substrat (4) eine metallische Schicht (5) und eine elektrisch isolierende Schicht (6) aufweist, auf welche elektrisch isolierende Schicht (6) diese beiden aus einem piezoresistiven Material (10.1, 10.2) bestehenden Messgitter (2, 3 bzw. 102, 103) aufgedruckt sind, **dadurch gekennzeichnet, dass** das zweite Messgitter (3) zum ersten Messgitter (2) rechtwinkelig orientiert als passives Messgitter (3) zur Temperaturkompensation der Dehnungsmesswerte des ersten Messgitters (2) ausgebildet ist, wofür beide Messgitter (2, 3) aus demselben piezoresistiven Material (10) bestehen, wobei das erste und zweite Messgitter (2, 3) je zumindest einen mäanderförmig verlaufenden Gitterabschnitt (2.1, 2.2, 2.3, 2.4 bzw. 3.1, 3.2, 3.3, 3.4) aufweisen, wobei ein Gitterabschnitt (2.1, 2.2, 2.3) des ersten Messgitters (2) zwischen zwei Gitterabschnitten (3.1, 3.2 bzw. 3.2, 3.3 bzw. 3.3, 3.4) des zweiten Messgitters (3) angeordnet ist.

2. Dehnungsmessstreifen nach Anspruch 1, **dadurch gekennzeichnet, dass** das erste und zweite Messgitter (2, 3) den gleichen Nennwiderstand ($R_0$) aufweisen.

3. Dehnungsmessstreifen nach Anspruch 1 oder 2, **dadurch gekennzeichnet, dass** jedes Messgitter (2, 3) mehrere mäanderförmig verlaufende Gitterabschnitte (2.1, 2.2, 2.3, 2.4 bzw. 3.1, 3.2, 3.3, 3.4) aufweist, welche Gitterabschnitte (2.1, 2.2, 2.3, 2.4 bzw. 3.1, 3.2, 3.3, 3.4) abwechselnd nacheinander angeordnet sind.

4. Dehnungsmessstreifen nach Anspruch 1, 2 oder 3, **dadurch gekennzeichnet, dass** ein Gitterabschnitt (2.1, 2.2, 2.3, 2.4) des ersten Messgitters (2) mehrere, insbesondere zwei, nebeneinander verlaufende Mäanderreihen (7, 8) aufweist.

5. Dehnungsmessstreifen nach einem der Ansprüche 1 bis 4, **dadurch gekennzeichnet, dass** das Verhältnis von mindestens einer Gitterlänge (l2.1, l2.2, l2.3, l2.4) eines ersten Gitterabschnittes (2.1, 2.2, 2.3, 2.4) zu mindestens einer Gitterbreite (b3.1, b3.2, b3.3, b3.4) eines zweiten Gitterabschnittes (3.1, 3.2, 3.3, 3.4) 1:0,75 bis 1:1,25, bevorzugt 1:0,9 bis 1:1,1, insbesondere 1:1, beträgt.

6. Dehnungsmessstreifen nach einem der Ansprüche 1 bis 5, **dadurch gekennzeichnet, dass** die Gitterabschnitte (2.1, 2.2, 2.3, 2.4 bzw. 3.1, 3.2, 3.3, 3.4) der jeweiligen Messgitter (2, 3) gleich verlaufend ausgebildet, insbesondere gleich, sind.

7. Dehnungsmessstreifen mit einem ersten Messgitter (2, 102), mit einem zweiten Messgitter (3, 103) und mit einem Substrat (4), auf dem diese beiden Messgitter (2, 3 bzw. 102, 103) in einer gemeinsamen Ebene (9) angeordnet sind, wobei das mehrschichtige Substrat (4) eine metallische Schicht (5) und eine elektrisch isolierende Schicht (6) aufweist, auf welche elektrisch isolierende Schicht (6) diese beiden aus einem piezoresistiven Material (10.1, 10.2) bestehenden Messgitter (2, 3 bzw. 102, 103) aufgedruckt sind, **dadurch gekennzeichnet, dass** das erste und zweite Messgitter (102, 103) gleichorientiert sind und als aktive Messgitter (102, 103) je ein piezoresistives Material mit zueinander unterschiedlichen Temperaturkoeffizienten ($\alpha1$, $\alpha2$) und zueinander unterschiedlichen Dehnungsfaktoren (k1, k2) aufweisen.

8. Dehnungsmessstreifen nach Anspruch 7, **dadurch gekennzeichnet, dass** das erste und zweite Messgitter (102, 103) je einen mäanderförmig verlaufenden Gitterabschnitt (102.1, 103.1) aufweisen.

9. Dehnungsmessstreifen nach Anspruch 8, **dadurch gekennzeichnet, dass** die Gitterabschnitte (102.1, 103.1) ineinander angeordnet gleichverlaufend sind.

10. Dehnungsmessstreifen nach einem der Ansprüche 7 bis 9, **dadurch gekennzeichnet, dass** die beiden Messgitter (102, 103) doppelmäanderförmig verlaufen.

11. Dehnungsmessstreifen nach einem der Ansprüche 1 bis 10, **dadurch gekennzeichnet, dass** die metallische Schicht (4.1) des Substrats (4) ein Aluminiumband oder Stahlband oder eine Platine aus Aluminium oder Stahl ist.

12. Dehnungsmessstreifen nach einem der Ansprüche 1 bis 11, **dadurch gekennzeichnet, dass** die elektrisch isolierende Schicht (6) des Substrats (4) ein Primer oder eine Isolierlackschicht oder eine organische oder anorganische Vorbeschichtung ist.

13. Metallband mit einer Beschichtung und mit einem Dehnungsmessstreifen (1, 100) nach einem der Ansprüche 1 bis 12, wobei das Metallband die metallische Schicht (5) des Substrats (4) des Dehnungsmessstreifens (1, 100) und dessen Beschichtung die elektrisch isolierende Schicht (6) des Substrats (4) Dehnungsmessstreifens (1, 100) ausbildet.

**Claims**

1. A strain gauge having a first measuring grid (2, 102), a second measuring grid (3, 103), and a substrate (4) on which these two measuring grids (2, 3 or 102, 103) are positioned in a common plane (9), wherein the multi-layer substrate (4) has a metallic layer (5) and an electrically insulating layer (6) onto which electrically insulating layer (6) these two measuring grids (2, 3 or 102, 103) consisting of a piezoresistive material (10.1, 10.2) are printed, **characterized in that** the second measuring grid (3) oriented at right angles to the first measuring grid (2) is embodied as a passive measuring grid (3) for temperature compensation of the strain measurement values of the first measuring grid (2) for which purpose the two measuring grids (2, 3) consist of the same piezoresistive material (10), wherein the first and second measuring grids (2, 3) each have at least one meandering grid section (2.1, 2.2, 2.3, 2.4 or 3.1, 3.2, 3.3, 3.4), with one grid section (2.1, 2.2, 2.3) of the first measuring grid (2) being positioned between two grid sections (3.1, 3.2 or 3.2, 3.3 or 3.3, 3.4) of the second measuring grid (3).

2. The strain gauge according to claim 1, **characterized in that** the first and second measuring grids (2, 3) have the same nominal resistance ($R_0$).

3. The strain gauge according to claim 1 or 2, **characterized in that** each measuring grid (2, 3) has several meandering grid sections (2.1, 2.2, 2.3, 2.4 or 3.1, 3.2, 3.3, 3.4), which grid sections (2.1, 2.2, 2.3, 2.4 or 3.1, 3.2, 3.3, 3.4) are positioned one after the other in alternating fashion.

4. The strain gauge according to claim 1, 2 or 3, **characterized in that** a grid section (2.1, 2.2, 2.3, 2.4) of the first measuring grid (2) has several, more particularly two, meandering rows extending next to each other (7, 8).

5. The strain gauge according to one of claims 1 to 4, **characterized in that** the ratio of at least one grid length (l2.1, l2.2, l2.3, l2.4) of a first grid section (2.1, 2.2, 2.3, 2.4) to at least one grid width (b3.1, b3.2, b3.3, b3.4) of a second grid section (3.1, 3.2, 3.3, 3.4) is 1:0.75 to 1:1.25, preferably 1:0.9 to 1:1.1, more particularly 1:1.

6. The strain gauge according to one of claims 1 to 5, **characterized in that** the grid sections (2.1, 2.2, 2.3, 2.4 or 3.1, 3.2, 3.3, 3.4) of the respective measuring grids (2, 3) are embodied as identically shaped, more particularly as identical.

7. The strain gauge having a first measuring grid (2, 102), a second measuring grid (3, 103), and a substrate (4) on which these two measuring grids (2, 3 or 102, 103) are positioned in a common plane (9), wherein the multi-layer substrate (4) has a metallic layer (5) and an electrically insulating layer (6) onto which electrically insulating layer (6) these two measuring grids (2, 3 or 102, 103) consisting of a piezoresistive material (10.1, 10.2) are printed, **characterized in that** the first and second measuring grids (102, 103) are identically oriented and, as active measuring grids (102, 103), have respective piezoresistive materials with temperature coefficients ($\alpha1$, $\alpha2$) that are different from each other and strain factors (k1, k2) that are different from each other.

8. The strain gauge according to claim 7, **characterized in that** the first and second measuring grids (102, 103) each have a meandering grid section (102.1, 103.1).

9. The strain gauge according to claim 8, **characterized in that** the grid sections (102.1, 103.1) are positioned one inside the other and are identically shaped.

10. The strain gauge according to one of claims 7 to 9, **characterized in that** the two measuring grids (102, 103) extend in a double meander.

11. The strain gauge according to one of claims 1 to 10, **characterized in that** the metallic layer (4.1) of the substrate (4) is an aluminum strip or steel strip or is a plate made of aluminum or steel.

12. The strain gauge according to one of claims 1 to 11, **characterized in that** the electrically insulating layer (6) of the substrate (4) is a primer or an insulating lacquer layer or an organic or inorganic pre-coating.

13. A metal strip having a coating and having a strain gauge (1, 100) according to one of claims 1 to 12, wherein the metal strip constitutes the metallic layer (5) of the substrate (4) of the strain gauge (1, 100) and its coating constitutes the electrically insulating layer (6) of the substrate (4) of the strain gauge (1, 100).

**EP 3 631 354 B1**

## Revendications

1. Jauge de contrainte avec une première grille de mesure (2, 102), avec une deuxième grille de mesure (3, 103) et avec un substrat (4) sur lequel ces deux grilles de mesure (2, 3 ou 102, 103) sont disposées dans un plan commun (9), le substrat multicouche (4) présentant une couche métallique (5) et une couche électriquement isolante (6), sur laquelle couche électriquement isolante (6) ces deux grilles de mesure (2, 3 ou 102, 103) constituées d'un matériau piézorésistif (10.1, 10.2) sont imprimées, **caractérisée en ce que** la deuxième grille de mesure (3) orientée perpendiculairement à la première grille de mesure (2) est conçue comme grille de mesure passive (3) pour la compensation de température des valeurs de mesure d'allongement de la première grille de mesure (2), les deux grilles de mesure (2, 3) étant constituées du même matériau piézorésistif (10), la première et la deuxième grilles de mesure (2, 3) comportant chacune au moins une section de grille (2.1, 2.2, 2.3, 2.4 ou 3.1, 3.2, 3.3, 3.4) s'étendant en méandres, une section de grille (2.1, 2.2, 2.3) de la première grille de mesure (2) étant disposée entre deux sections de grille (3.1, 3.2 ou 3.2, 3.3 ou 3.3, 3.4) de la deuxième grille de mesure (3).

2. Jauge de contrainte selon la revendication 1, **caractérisée en ce que** la première et la deuxième grilles de mesure (2, 3) présentent la même résistance nominale ($R_0$).

3. Jauge de contrainte selon la revendication 1 ou 2, **caractérisée en ce que** chaque grille de mesure (2, 3) présente plusieurs sections de grille (2.1, 2.2, 2.3, 2.4 ou 3.1, 3.2, 3.3, 3.4) s'étendant en méandres, lesquelles sections de grille (2.1, 2.2, 2.3, 2.4 ou 3.1, 3.2, 3.3, 3.4) sont disposées en alternance les unes après les autres.

4. Jauge de contrainte selon la revendication 1, 2 ou 3, **caractérisée en ce qu'**une section de grille (2.1, 2.2, 2.3, 2.4) de la première grille de mesure (2) présente plusieurs, en particulier deux, rangées de méandres (7, 8) s'étendant côte à côte.

5. Jauge de contrainte selon l'une des revendications 1 à 4, **caractérisée en ce que** le rapport d'au moins une longueur de grille (12.1, 12.2, 12.3, 12.4) d'une première section de grille (2.1, 2.2, 2.3, 2.4) à au moins une largeur de grille (b3.1, b3.2, b3.3, b3.4) d'une deuxième section de grille (3.1, 3.2, 3.3, 3.4) est de 1:0,75 à 1:1,25, de préférence de 1:0,9 à 1:1,1, en particulier de 1:1.

6. Jauge de contrainte selon l'une des revendications 1 à 5, **caractérisée en ce que** les sections de grille (2.1, 2.2, 2.3, 2.4 ou 3.1, 3.2, 3.3, 3.4) des grilles de mesure respectives (2, 3) sont conçues pour s'étendre de la même manière, notamment de manière identique.

7. Jauge de contrainte avec une première grille de mesure (2, 102), avec une deuxième grille de mesure (3, 103) et avec un substrat (4) sur lequel ces deux grilles de mesure (2, 3 ou 102, 103) sont disposées dans un plan commun (9), le substrat multicouche (4) présentant une couche métallique (5) et une couche électriquement isolante (6), sur laquelle couche électriquement isolante (6) ces deux grilles de mesure (2, 3 ou 102, 103) constituées d'un matériau piézorésistif (10.1, 10.2) sont imprimées, **caractérisée en ce que** la première et la deuxième grilles de mesure (102, 103) sont orientées de la même manière et présentent chacune comme grille de mesure active (102, 103) un matériau piézorésistif avec des coefficients de température ($\alpha1$, $\alpha2$) différents l'un de l'autre et des facteurs d'allongement (k1, k2) différents l'un de l'autre.

8. Jauge de contrainte selon la revendication 7, **caractérisée en ce que** la première et la deuxième grilles de mesure (102, 103) présentent chacune une section de grille (102.1, 103.1) s'étendant en méandres.

9. Jauge de contrainte selon la revendication 8, **caractérisée en ce que** les sections de grille (102.1, 103.1) disposées les unes dans les autres s'étendent de la même manière.

10. Jauge de contrainte selon l'une des revendications 7 à 9, **caractérisée en ce que** les deux grilles de mesure (102, 103) s'étendent en forme de double méandre.

11. Jauge de contrainte selon l'une des revendications 1 à 10, **caractérisée en ce que** la couche métallique (4.1) du substrat (4) est une bande d'aluminium ou une bande d'acier ou une platine en aluminium ou en acier.

12. Jauge de contrainte selon l'une des revendications 1 à 11, **caractérisée en ce que** la couche électriquement isolante (6) du substrat (4) est un apprêt ou une couche de vernis isolant ou un prérevêtement organique ou inorganique.

13. Bande métallique avec un revêtement et avec une jauge de contrainte (1, 100) selon l'une des revendications 1 à 12, dans laquelle la bande métallique forme la couche métallique (5) du substrat (4) de la jauge de contrainte (1, 100) et son revêtement forme la couche électriquement isolante (6) du substrat (4) de la jauge de contrainte (1, 100).

Fig. 1

Fig. 1a

*Fig. 2*

EP 3 631 354 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017028466 A1
- US 4430895 A
- CN 105352431 A